# EUROPÄISCHE PATENTANMELDUNG

(11) **EP 1 780 637 A1**
(43) Veröffentlichungstag der Anmeldung: **02.05.2007**
(21) Anmeldenummer: 05023319.6
(22) Anmeldetag: 25.10.2005
(51) Int. Cl.: G06F 9/44

(54) **Verfahren zur Zurücknahme ausgeführter Aktionen mittels einer grafischen Benutzeroberfläche**

(71) Anmelder: SIEMENS AKTIENGESELLSCHAFT, 80333 München (DE)
(72) Erfinder: Kinzel, Klaus, 90556 Cadolzburg (DE); Metzler, Carsten, 91056 Erlangen (DE); Schmidt, Johanna, 84489 Burghausen (DE); Platz, Axel, 81479 München (DE); Rettner, Juliane, 90489 Nürnberg (DE); Weinländer, Markus, 91230 Happurg (DE)

(57) **Zusammenfassung**

Erfindungsgemäß wird ein Verfahren angegeben, durch welches die ausgeführten Aktionen unabhängig von der jeweils betroffenen grafischen Konfiguration in umgekehrter chronologischer Reihenfolge der Aktionen rückgängig gemacht werden, wobei die Aktionen mittels mindestens zwei grafischen Konfigurationen einer Benutzeroberfläche in einem elektronischen System ausgeführt worden sind. Die ausgeführten Aktionen werden mittels eines gemeinsamen Stacks aufgezeichnet. Damit kann ein Benutzer allein in einem Fenster alle Aktionen, die die verschiedenen Fenster bzw. die miteinander verbundenen Objekte betreffen, ohne komplexe Wechsel zwischen den verschiednen Fenstern komplett zurücknehmen. Dadurch ergibt sich eine Zeitersparnis. Es wird eine einfache Bedienung/Verwendung vor allem für Anfänger bzw. Umsteiger und dadurch geringere Einstiegshürden bzw. eine einfachere Einarbeitung ermöglicht.

## Beschreibung

Die Erfindung betrifft ein Verfahren zur Zurücknahme von Aktionen, die mittels mindestens zwei grafischen Konfigurationen einer Benutzeroberfläche in einem elektronischen System ausgeführt werden, und ein elektronisches System, bei den Aktionen mittels mindestens zwei grafischen Konfigurationen einer Benutzeroberfläche des Systems ausführbar sind.

Die Erfindung liegt auf dem Gebiet der Datenverarbeitungssysteme und berührt spezieller die Rücknahme von durch einen Benutzer auf einem derartigen System veranlassten Aktionen. Ausgeführte Aktionen bzw. Aktionen, die nicht das gewünschte Ergebnis gebracht haben, sollen zurücknehmbar sein.

Bei interaktiven Programmen (z.B. bei Editoren) ist es häufig wünschenswert, Änderungen nur vorläufig zu machen und sie gegebenenfalls wieder zurücknehmen zu können. Eine UNDO-Funktion lässt den Benutzer solche Aktionen rückgängig machen. Die UNDO-Funktion und ihre Wirkungsweisen sind von Programm zu Programm verschieden. Auch muss die Wirkungsweise von UNDO-Funktionen auf je ein geöffnetes Dokument definiert sein, weil mehrere Dokumente gleichzeitig geöffnet und unabhängig voneinander bearbeitet werden können sollen. In einer Applikation wie "Microsoft Word" gibt es zur Implementierung von UNDO-Funktionen je geöffnetes Dokument eine Liste der erfolgten Bedieneroperationen (sog. UNDO-Stack).

Eine komplexe Software-Applikation wie ein Engineering-System bietet jedoch dem Benutzer mehrere Bedienfenster gleichzeitig an. Jedes Fenster zeigt Teile der technischen Lösung an und ist durch das System miteinander verbunden, d.h. die Eingabe in einem Fenster kann die Anzeige eines anderen Fensters verändern bzw. Objekte in einem anderen Fenster beeinflussen. Im Zuge der Bedienung ist es für den Benutzer jedoch meist notwendig, oft zwischen diesen Fenstern zu wechseln.

Mit dem gewöhnlichen UNDO-Algorithmus müsste jeder Fensterbereich mit einem eigenen UNDO-Stack versehen sein. Dies würde aber oft zu Inkonsistenzen führen, denn die Fensterinhalte können sich gegenseitig beeinflussen. Weiterhin müsste der Benutzer beim Zurücknehmen einer mehrstufigen Benutzeraktion (z.B. Einfügen und Verschalten eines HW-Signals) selbst zwischen den Fensterbereichen hin- und herwechseln, um genau den ursprünglichen Zustand wieder herzustellen. Schließlich müsste die UNDO-Funktion entweder für jeden Fensterbereich eigens angeboten werden (was jedoch Bildschirmplatz kostet) oder aber der Benutzer müsste vor dem Aufruf der UNDO-Funktion einen Fensterbereich auswählen, auf den die UNDO-Funktion wirken soll (wie die Praxis gezeigt hat, wird das wiederum von Benutzern häufig nicht verstanden).

Der Erfindung liegt die Aufgabe zugrunde, die Rücknahme von Aktionen, die mittels mindestens zwei grafischen Konfigurationen einer Benutzeroberfläche ausgeführt worden sind, zu vereinfachen.

Diese Aufgabe wird erfindungsgemäß durch ein Verfahren mit den Merkmalen des Patentanspruchs 1 und ein elektronisches System mit den Merkmalen des Patentanspruchs 5 gelöst. Die abhängigen Ansprüche betreffen vorteilhafte Weiterbildungen und Ausgestaltungen des Verfahrens.

Erfindungsgemäß wird vorgeschlagen, die ausgeführten Aktionen unabhängig von der jeweils betroffenen grafischen Konfiguration in umgekehrter chronologischer Reihenfolge der Aktionen zurückzunehmen, wenn die Aktionen mittels mindestens zwei grafischen Konfigurationen (Bsp. Bedienfenster) einer Benutzeroberfläche in einem elektronischen System ausgeführt worden sind.

Da die Eingaben in einem Fenster oft die Anzeige eines anderen Fensters verändern bzw. Objekte in einem anderen Fenster beeinflussen, werden die ausgeführten Aktionen vorzugsweise mittels eines gemeinsamen Stacks aufgezeichnet. Wird eine Aktion zurückgenommen und sind noch weitere Operationen im UNDO-Stack, rückt die nächste zurücknehmbare Operation auf den Platz der aktuell zurücknehmbaren Operation vor. Damit kann ein Benutzer allein in einem Fenster alle Aktionen, die die verschiedenen Fenster bzw. die miteinander verbundenen Objekte betreffen, ohne komplexe Wechsel zwischen den verschiedenen Fenstern komplett zurücknehmen. Eine Zeitersparnis ergibt sich ebenfalls aus dieser UNDO-Funktion, mit der sich Bearbeitungsschritte unselektierter Objekte rückgängig machen lassen.

Die Zurücknahme einer ausgeführten Aktion kann durch eine entsprechende Änderung der Fensterkonfiguration oder des Objekts, das durch die Aktion hervorgerufen wurde, auf der Benutzerfläche dargestellt werden. Damit ist es leicht zu erkennen bzw. zu beobachten, was für Zusammenhänge zwischen den Objekten bzw. den ausgeführten Aktionen bestehen oder ob die rückgängig gemachten Arbeitsschritte verloren gehen und nicht wieder herzustellen sind.

Falls der Benutzer die Aktionen nach deren Rücknahme wieder ausführen möchte, kann die ausgeführten Aktionen in umgekehrter Reihenfolge der Zurücknahmen wiedergeholt werden. Beispielsweise wird dies durch eine Redo-Funktion realisiert.

Außer dem oben geschilderten Verfahren beinhaltet die Erfindung auch ein elektronisches System, in dem die ausgeführten Aktionen unabhängig von der jeweils betroffenen grafischen Konfiguration chronologisch zurücknehmbar sind, wenn die Aktionen mittels mindestens zwei grafischen Konfigurationen einer im System bedienten Benutzeroberfläche ausgeführt worden sind.

Dafür kann ein gemeinsamer Stack zur Aufzeichnungen der ausgeführten Aktionen in dem elektronischen System vorgesehen werden. Somit können mittels eines einheitlichen Befehls - z.B. Klick auf ein Icon in einem Steuerfenster - alle Aktionen, die die verschiednen Fenster bzw. die miteinander verbundenen Objekte betreffen, ohne komplexe Wechsel zwischen den verschiedenen Fenstern komplett rückgängig gemacht werden.

Die Rücknahme einer ausgeführten Aktion kann durch eine Änderung der Fensterkonfiguration oder des Objekts, die durch die Aktion hervorgerufen wird, auf der Benutzerfläche des Systems dargestellt werden.

Falls der Benutzer die Aktionen nach deren Rücknahme wieder ausführen möchte, können die ausgeführten Aktionen in umgekehrter Reihenfolge wiederholt werden.

Durch die beschriebene Ausgestaltung der UNDO-Funktion wird diese auch in komplexen Entwicklungsumgebungen leicht und effizient ausführbar, ohne dass der Anwender das System in inkonsistente Zustände bringen könnte. Die UNDO-Funktion ist zudem leicht erlernbar, weil es nur einen gemeinsamen Einstieg gibt und der Anwender nicht zuvor einen Fensterbereich selektieren muss. Es wird eine einfache Bedienung/Verwendung vor allem für Anfänger bzw. Umsteiger und dadurch geringere Einstiegshürden bzw. eine einfachere Einarbeitung ermöglicht.

Die Erfindung wird im Folgenden anhand von Zeichnungen erläutert. Es zeigen:
- Fig. 1 :: ein Beispiel bei einer objektorientierten Benutzer-oberfläche
- Fig. 2:: ein Beispiel bei einer erfindungsgemäßen Benutzer-oberfläche

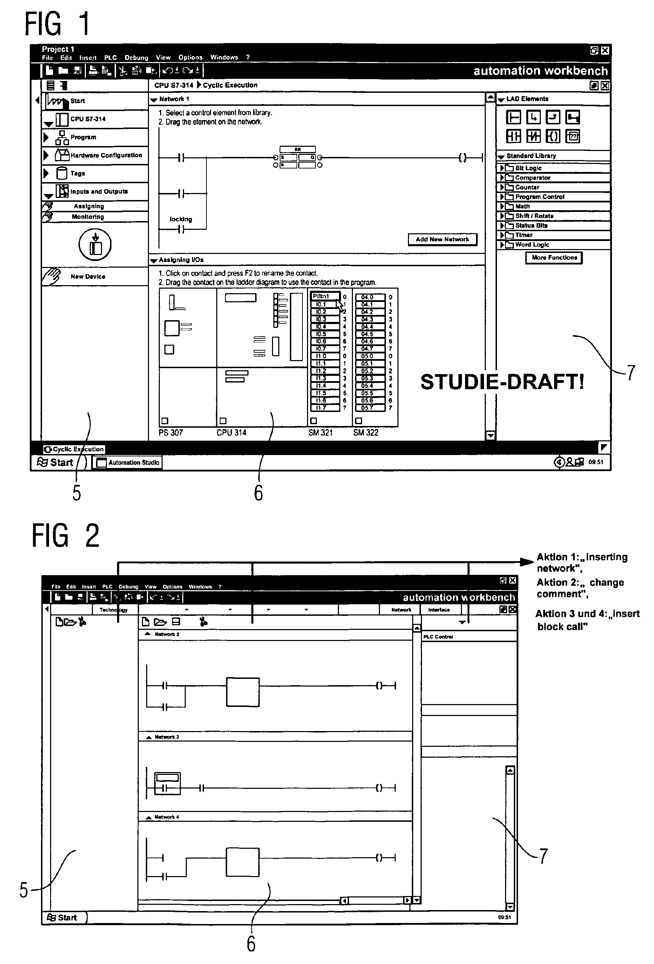

Fig.1 zeigt den prinzipiellen Aufbau eines Engineering-Systems mit mehreren verschiedenen Fenstern. Hier sind die Fenster/Felder 5, 6 und 7, d.h. drei grafischen Konfigurationen gegeben. Jedes Fenster zeigt Teile der technischen Lösung an und ist durch das System miteinander verbunden, d.h. die Eingaben in einem der Fenster 5, 6 und 7 werden häufig die Anzeige eines anderen Fensters verändern bzw. Objekte in einem anderen Fenster beeinflussen. Aufgrund der Aufgabe müsste jeder Fensterbereich mit einem eigenen UNDO-Stack versehen sein und ist es für den Benutzer jedoch notwendig, oft zwischen diesen Fenstern zu wechseln.

In Fig. 2 wird gezeigt, diese verschiedenen Fensterbereiche in den gemeinsamen UNDO-Stack integriert sind, d.h. Aktionen, die in unterschiedlichen Bereichen durchgeführt werden, werden in einem gemeinsamen Stack aufgezeichnet. Ein Beispiel für das Verfahren wird im Folgenden beschrieben, wobei die Aktion (Funktionsaufruf) 1 "inserting network", die Aktion 2 "change comment", die Aktion 3 und 4 "insert block call" nacheinander durchgeführt worden sind. Sie betreffen die verschiedenen Fenster 5, 6 und 7 bzw. die miteinander verbundenen Objekte.

Das Fenster 5 auf der linken Seite (Projektbaum) stellt alle Objekte innerhalb des geöffneten Projektes dar. Hier sind allgemeine Operationen innerhalb des Projekts möglich, z.B. Objekte anlegen, Objekte löschen, Objekte kopieren etc..

Das Fenster 6 in der Mitte (Editor) ist der Bereich, in dem bestimmte Objekte bearbeitet werden. Die möglichen Operationen hängen hier davon ab, welches Objekt gerade bearbeitet wird. Das Fensterfeld 7 rechts (TaskCard) ist eine Sammlung von Werkzeugen und Daten, die für die Bearbeitung der Objekte benötigt werden. Hier können Operationen angestoßen werden, welche sich auf das geöffnete Objekt beziehen. Außerdem sind Operationen auf Daten möglich, z.B. wenn Bestandteile einer Bibliothek angezeigt werden, in die Objekte kopiert oder aus der Objekte gelöscht werden können.

Die Aktionen 1, 2 und 3 sind alle im Fenster 6 durchgeführt worden. Bei ihnen handelt es sich um Einfügeoperationen. Der Benutzer kann durch den gemeinsamen Stack bzw. allein in dem Fenster 6 die alle Aktionen ohne komplexe Wechsel zwischen den verschiednen Fenstern 5, 6, und 7 komplett zurücknehmen. Es werden so alle zuletzt durchgeführten Arbeitsschritte rückgängig gemacht. Sie können somit das Projekt einfach in einen älteren Bearbeitungszustand zurückversetzen. Aus dieser UNDO-Funktion ergibt sich eine Zeitersparnis, denn der Benutzer kann die ausgeführten Aktionen unabhängig von der Objektselektion rückgängig machen.

Beim Ausführen einer UNDO-Operation wird der durch die Änderung betroffene Fensterbereich hervorgehoben und ggf. die Änderung angezeigt, damit der Benutzer weiß, worauf sich UNDO bezogen hatte.

## Patentansprüche

1. Verfahren zur Zurücknahme von Aktionen, die mittels mindestens zwei grafischen Konfigurationen einer Benutzeroberfläche in einem elektronischen System ausgeführt werden,
**dadurch gekennzeichnet, dass**
die ausgeführten Aktionen unabhängig davon, welche grafische Konfiguration jeweils durch die einzelnen Aktionen betroffen ist, in umgekehrter chronologischer Reihenfolge der Aktionen rückgängig gemacht werden.

2. Verfahren nach Anspruch 1,
**dadurch gekennzeichnet , dass**
die ausgeführten Aktionen mittels eines gemeinsamen Stacks aufgezeichnet werden.

3. Verfahren nach Anspruch 1 oder 2,
**dadurch gekennzeichnet , dass**
die Zurücknahme einer der ausgeführten Aktionen auf der Benutzerfläche jeweils eine entsprechende Änderung bei der durch die Aktion beeinflussten grafischen Konfiguration bewirkt.

4. Verfahren nach einem der vorhergehenden Ansprüche,
**dadurch gekennzeichnet, dass**
die zurückgenommenen Aktionen mittels einer Redo-Funktion in der umgekehrten Reihenfolge ihrer Rücknahme wieder ausgeführt werden.

5. Elektronisches System, bei dem Aktionen mittels mindestens zwei grafischen Konfigurationen einer Benutzeroberfläche des Systems ausführbar sind,
**dadurch gekennzeichnet , dass**
die ausgeführten Aktionen unabhängig davon, welche grafische Konfiguration jeweils durch die einzelnen Aktionen betroffenen ist, in umgekehrter chronologischer Reihenfolge der Aktionen zurücknehmbar sind.

6. System nach Anspruch 5,
**dadurch gekennzeichnet, dass**
ein gemeinsamer Stack zur Aufzeichnungen der ausgeführten Aktionen in dem elektronischen System vorgesehen ist.

7. System nach Anspruch 5 oder 6,
**dadurch gekennzeichnet , dass**
durch die Zurücknahme einer der ausgeführten Aktionen auf der Benutzerfläche jeweils eine entsprechende Änderung bei der durch die Aktion beeinflussten grafischen Konfiguration bewirkbar ist.

8. System nach einem der Ansprüche 5 bis 7,
**dadurch gekennzeichnet , dass**
die zurückgenommenen Aktionen mittels einer Redo-Funktion in der umgekehrten Reihenfolge ihrer Rücknahme wieder ausführbar sind.
